# EUROPEAN PATENT SPECIFICATION

(11) **EP 4 382 378 B1**
(45) Date of publication and mention of the grant of the patent: **25.03.2026**
(21) Application number: 22211573.5
(22) Date of filing: 06.12.2022
(51) Int. Cl.: B60T 17/22, F16D 66/02, F16D 65/12, F16D 69/04, F16D 66/00

(54) **WEAR SENSORING**
VERSCHLEISSSENSORIK
CAPTEUR D'USURE

(43) Date of publication of application: 12.06.2024
(73) Proprietor: KNORR-BREMSE Systeme für Nutzfahrzeuge GmbH, 80809 München (DE)
(72) Inventor: ADAMCZYK, Philipp, 82347 Bernried (DE); BLESSING, Michael, 80687 München (DE); GYÖRKE, Zsombor, 8360 Keszthely (HU); HEIGL, Korbinian, 80939 München (DE); HÖS, Levente, 1047 Budapest (HU); HOLLOSI, Mate, 1097 Budapest (HU); KLINGNER, Matthias, 82276 Adelshofen (DE); KOKREHEL, Csaba, 1119 Budapest (HU); KRÜGER, Sven Philip, 81476 München (DE); MONORI, Gyula, 6065 Lakitelek (HU); NAKAMURA, Tatsuro, 1027 Budapest (HU); PESCHEL, Michael, 82296 Schöngeising (DE); TOTH, Janos, 6000 Kecskemét (HU); TOTH-KATONA, Tamas, 1039 Budapest (HU); SCHÖFBERGER, Tobias, 84048 Mainburg (DE); SZABO, Janos, 1101 Budapest (HU); KRETZ, Philipp, 80939 München (DE)

(56) References cited:
- EP-A1- 2 149 721
- EP-A1- 3 971 440
- CN-A- 110 462 246
- JP-A- 2020 517 868
- JP-U- S52 127 189
- US-B2- 10 041 556

## Description

The present invention refers to determining the wear state of a friction surface of a wear element, a friction brake and a vehicle.

Current discs for disc brakes are usually made from steel or grey cast iron, which is partly removed over the lifetime due to wear during a frictional force transmission between the disc and the brake pad. This removed steel is exposed to the environment as fine particle emission. An already known solution in order to avoid this fine particle emission is a coating of the brake disc, which reduces wear significantly. As a consequence, the coating lasts for huge distances, in which the wear of the brake disc is nearly zero. Then the coating is removed due to the wear, now in a maintenance process the brake-disc could be coated again.

The wear status of the coating is nearly impossible to measure, since the coating itself is very thin and the tolerances of the disc thickness itself has a similar magnitude. Thus, measuring the disc thickness has no information gain. More complicated measurement procedures require a dismantling of the brake disc, which is effortful.

In this context, EP 3 971 440 A1 relates to a braking band of a disc brake disc, which is defined by an annular band body. The band body is made of a base metal. The braking band comprising at least one braking surface and at least a portion of this surface comprises a surface coating suitable to increase the tribological performance and/or the wear and/or corrosion resistance of said braking surface portion with respect to said base metal. The surface coating has an average thickness. The braking band comprises at least one marking which is obtained on said surface coating and consists of at least one recess which extends from the surface of said surface coating to a predefined depth not exceeding the average thickness of said surface coating. In use the loss of thickness of the surface coating due to wear causes a corresponding decrease in the depth of said at least one recess.

EP 2 149 721 A1 relates to a brake including friction material, a backing pad, sensor-wear material embedded within the friction material, and an electronics assembly. The electronics assembly is configured to measure a characteristic of the sensor-wear material, such as the electrical resistance or the temperature of the sensor-wear material.

Reducing the wear and the fine particle emission of the brake disc is a major step in the process of further reducing the fine particle emission of the complete truck. A coated disc could pave the way for reaching a new legislation level of the European fine particle emission norm for commercial vehicles (Euro 7 or similar).

However, if due to the increasing wear of the brake disc the coating of the brake disc is removed, fine particle emission increases suddenly, since the material of the brake disc that had been coated during manufacturing with a protective coating of the brake disc is now in direct frictional contact with the brake pads during braking. Therefore, the respective Euro norm cannot be fulfilled.

Based on this problem, a brake disc is regarded as a special embodiment of a general wear element that is configured to get in frictional contact with a friction counter element for frictional force transmission.

To overcome the problem above, wear elements, in particular brake discs were developed comprising a non-even surface with at least one projection, wherein the non-even surface is covered with a protective coating to reduce the particle emissions and to realize a smoother transition to a wear state, wherein relatively high particle emissions occur.

However, there is still a need for determining the wear state of a friction surface of such a wear element, in particular for maintenance planning.

Therefore, it is an object of the present invention to provide a possibility to determine the wear state of a friction surface of the wear element

This object is reached by the subject-matter of the independent claims. Advantageous embodiments are subject-matter of the dependent claims.

According to the invention, a method for determining the wear state of a friction surface of a wear element is provided. The wear element is preferably configured as described later below. In particular, the wear element comprises a base element with a non-even surface with at least one projection and a protective coating at least partially covering the at least one projection to form the friction surface, wherein the method comprises the steps:
- step S1: providing a detection means configured to detect at least one wear characteristic of the friction surface;
- step S2: establishing and/or evaluating boundary conditions for detecting the at least one wear characteristic of the friction surface;
- step S3: detecting the wear characteristic of the friction surface; and
- step S4: determining the wear state from the detected wear characteristic.

The wear characteristic is at least one technical characteristic the wear state can be determined from. Therefore, the wear characteristic needs to be a characteristic that changes due to the increasing wear of the wear element and in particular due to the increasing wear of the friction surface. Later below, some preferred embodiments of the method are described, wherein different examples for the wear characteristic are given.

According to the invention, in step S2, an evaluation of boundary conditions for the detection of the at least one wear characteristic is carried out. In particular, the temperature of the friction surface is determined and compared to a predetermined threshold. Further boundary conditions are described later.

Preferably, in step S2, as a boundary condition for the detecting according to step S3, a wear characteristic according to an earlier point of time is determined and saved. Preferably, the wear characteristic is saved by the detection means. Preferably, the wear characteristic according to the earlier point of time is the wear characteristic of the unworn wear element after assembling the wear element. Further preferably, when the method is carried out to a later point of time when the friction surface is worn, step S3 may comprise a comparison, wherein the currently detected wear characteristic is compared to the saved one. Thereby, it can be determined how much the wear of the wear element increases.

Preferably, in step S2, a relative speed between the detection means and the friction surface is reduced to zero or to a predetermined speed. Alternatively or additionally, the relative speed between the detection means and the friction surface is determined in particular by using a speed detection means, preferably a rotational speed detection means. Some of the embodiments of the method below for detecting the wear characteristic according to step S3 may need the information of the relative speed between the detection means and the friction surface as an input value.

According to one aspect of the present invention, in step S1, a contact is established between the detection means and the friction surface. Some of the embodiments of the method below for detecting the wear characteristic according to step S3 may need a contact between the detection means and the frictional surface.

According to one alternative of the present invention, the detection means is configured as an electric detection means and in step S3, the detection means detects the electric surface resistance of the friction surface as the wear characteristic. If wear of the friction surface increases, the electric surface resistance changes, since the percentage of area of the friction surface formed by the at least one projection increases, wherein the percentage of area of the friction surface formed by the protective coating is reduced in the same manner. If the electric detection means is in contact with the friction surface, a surface resistance can be determined. According to one alternative of the present invention, in step S3, the detection means is configured to detect the electric resistance through the wear element when the detection means is in contact with two different friction surfaces of the wear element. For detecting the surface resistance or the resistance through the wear element, two electric contacts of the detection means are brought in electric contact with the friction surface or the two friction surfaces, respectively. According to a determination of an electric resistance, a predetermined electric current or a predetermined electric voltage is applied between both contacts to determine the electric resistance between the contacts as a wear characteristic of the wear element.

This method is preferably carried out during standstill of the wear element to avoid a relative movement between the friction surface and the electric contacts of the wear element and therefore to avoid damage of the electric contacts.

As an initial measurement the disc temperature may be determined, since the temperature affects the electric resistance of the friction surface and/or of the wear element itself.

After that, the electric contacts of the electric detection means are moved to the friction surface until they touch the friction surface. There, they induct a certain voltage or current in-between the sensors and measure vice versa in order to determine the electric resistance. The electric contacts of the electric detection means are then moved back to their initial positions away from the friction surface. Alternatively, the moving of the electric contacts is carried out manually by an operator, wherein preferably, the electric detection means is a handheld device carried by the operator.

The temperature of the wear element and in particular of the friction surface is relevant in two ways. First, the detection of the electric resistance is only feasible while the temperature is not exceeding a certain threshold temperature that could damage the electric contacts of the detection means. Secondly, the temperature is also a quantity of interest in the calculation of the electric resistance. From the electric resistance now a certain material combination on the disc surface can be calculated (e. g. 30% coating/ 70% steel at the projection). Therefore, the electric resistance is a good measurement value for the wear characteristic of the wear element.

According to an alternative or additional aspect of the present invention, the detection means is configured as an inductive detection means, wherein, in step S3, an electric voltage induced by a relative movement between the wear element and the detection means, in particular by a movement of the wear element, is detected by the detection means as a wear characteristic, wherein the inductive detection means faces the friction surface.

If the non-even surface of the wear element comprises projections that are arranged in a manner that when a relative movement between the detection means and the wear element is carried out, the detection means faces a projection followed by a space between the projections and followed by the next projection. I.e. projections and spaces between the projections are alternating and therefore, the voltage induced in the inductive detection means is alternating. The way the voltage is alternating, e.g. the frequency, the amplitude, the uniformity of the voltage curve may be used as a wear characteristic. The space between the projections may be filled with the material of the protective coating. Since two materials are alternating (the material of the at least one projection and of the protective coating), this leads to an alternating signal as well.

The signal is changing with the wear state of the wear element, in particular of the friction surface, due to the different magnetic permeability of the protective coating and the material of the projections and of the base element. Since the composition of the friction surface is changing due to wear, also the overall magnetic permeability is changing.

In particular, if the wear element which is configured to rotate comprises radial projections as described later below, these projections and the spaces between the projections lead to the altering voltage in the inductive detection means facing the projections perpendicular to the non-even surface when the wear element is rotated.

According to a further alternative or additional aspect of the present invention, the detection means is configured as an optical detection means, wherein, in step S3, the optical detection means detects a pattern on the friction surface as a wear characteristic, wherein the pattern is formed of material of the protective coating and of the at least one projection. Since the protective coating and the at least one projection consist of different materials, a pattern can be optically detected that changes with increasing wear. In the unworn state, the at least one projection may be completely covered by the protective coating, wherein due to increasing wear, the projection gets more and more uncovered and the pattern consisting of both, the protective coating and the at least one projection, changes optically. In particular, a pattern of altering stripes may occur, wherein one stripe is defined by a projection, wherein an adjacent stripe is defined by material of the protective coating that is located in a space between two projections.

Preferably, the optical detection means comprises a camera, wherein the camera detects visual information from the friction surface in step S3 and/or in step S3, the optical detection means comprises a light source, in particular a laser or an IR light source, and a detection element, wherein the light source emits light to the friction surface that is reflected by the friction surface and detected by the detection element wherein the reflected light acts as a wear characteristic.

Using optical detection means does not necessarily need to keep the wear element in stand still. There may be a relative movement between the wear element and the detection means as well, since then, an altering in the visual information from the friction surface is detected that may be used as a wear characteristic as well.

Preferably, the detection means comprises heat radiation detection means detecting heat radiation as a wear characteristic from the friction surface in step S3, if the temperature of the friction surface is above a predetermined threshold.

As a wear characteristic, the radiated temperature profile of the wear element, in particular of the friction surface, is detected, wherein this profile depends on the state of wear, due to the different thermal capacity and radiation coefficient of the two materials of the at least one projection and of the protective coating. I.e. due to wear, the percentage of area consisting of the protective coating and of the at least one projection changes and therefore, the heat radiation profile radiated by the friction surface changes as well. The heat radiation from the friction surface may therefore be used as wear characteristic.

Alternatively or additionally, as a wear characteristic, an electric capacitance may be determined by the detection means. Preferably, the detection means is configured to establish an electric or electro-magnetic field through the wear element, in particular through the friction surface with the protective coating and with the at least one projection and through the base element. The detection means and the wear element therefore form an electric capacitor. For example, if the wear element is configured as a disc, in particular as a brake disc, the detection means is positioned to establish the electric field through the wear element and through clearances between the detection means and the friction surfaces. Since the electric capacitance of this configuration the detection means may determine, depends on the thickness of the protective coating, the electric capacitance may therefore be used as wear characteristic.

Preferably, the wear element comprises a rotational axis and is configured to rotate around this axis. I.e. the detection methods above that require a relative movement between the friction surface and the detection means may be carried out by providing the detection means facing a part of the friction surface without abutting to the friction surface, wherein the friction surface rotates. If the at least one projection is arranged in a manner that due to the rotation, the detection means faces projections and spaces between the projections in an altering manner, detection methods like inductive, optical and heat-based methods as described above may be used, wherein optical and heat-based methods may be used in standstill of the wear element as well.

Preferably, the wear element is configured as a disc with an axis concentric to the rotational axis, wherein at least one side of the disc the rotational axis is oriented perpendicular to is configured as the at least one friction surface, and/or wherein the at least one projection is provided concentrically or radially to the rotational axis.

Preferably, the wear element is configured as a brake disc and the at least one friction surface is configured to get in frictional contact with at least one brake pad acting as friction counter element.

Preferably, according to the wear state, an automatic maintenance planning is carried out. In particular, if the wear element is part of a vehicle, in particular if the wear element is configured as a brake disc, based on the determined wear state, a forecast may be calculated, how far the vehicle may drive or how many hours of operation are still possible without risking increased particle emissions from the wear element as described above or even risking a decreasing brake performance. Therefore, the invention helps to fulfil legal requirements. Further, the planning of maintenance procedures themselves is simplified, since the required parts and time capacities can be determined and ordered before the vehicle arrives in the tool shop. Thus the down-time of the vehicle and the capacities in the tool shop are much better predictable.

In the following, boundary conditions of step S2 for establishing and/or evaluating boundary conditions for detecting the at least one wear characteristic of the friction surface are described more in detail. Preferably, at least one of these boundary conditions is taken into account when wear of at least one friction surface of a wear element that is configured as a brake disc is determined. I.e., in the following, the expression "disc" or "brake disc" may be understood as the wear element as well.

Boundary condition temperature: contact-based detection principles cannot measure the wear characteristic if the disc surface exceeds a certain temperature. In order to prevent this the disc temperature needs to be determined. An alternative procedure could be to wait a specified amount of time a vehicle is parked and measure then, since then one can be sure, that the disc is cooled down. The amount of time necessary can be determined once for example by testing the cool-down properties of the disc. The temperature also influences the measurement result itself for all of the procedures including the non-contact measurements. E.g. the specific electric resistance differs with the temperature, also the optical emission of the disc depends on the temperature. The temperature most significantly impacts the thermal measurement of radiated thermal energy, here the temperature of the disc base element is also necessary for deriving a useful result. Further, detection principles as the ones based on the electric capacitance or the inductivity as described above depend on the temperature as well.

Boundary condition velocity: As already mentioned, contact-based measurement principles can only be applied in a case of stand-still of the disc resp. the vehicle. But also in case of other principles (e.g. radial oriented projections combined with inductive or optical measurement) the velocity has an impact on the wear measurement and needs therefore to be determined (which is done for each wheel individually with the wheel speed sensors).

Boundary condition corrosion: If a vehicle was not moved for certain time (in special conditions minutes/hours, in other conditions after a couple of days) it is common, that the friction surface of the brake disc corrodes. The corrosion affects the properties of the friction surface (for example the pattern of projections and protective coating, the electric resistance). Therefore, a corrosion detection needs to be implemented. Or the measurement only is to be done, if one can be certain, that there is no corrosion on the friction surface, e.g. after a couple of brake actuations which in most cases clean the disc from corrosion. Therefore, the method may only be carried out, when at least one predetermined brake actuation (for example characterized by brake torque, brake pressure, number of actuations) has been carried out.

Boundary condition dirt: Similar as with the corrosion, also dirt collected from the road or brake dust resulting from wear of the brake pad and disc while driving can jam the measurement. Therefore, an active dirt detection or active disc cleaning needs to be provided. For example, as described above at the boundary condition corrosion, the measurement is only carried out, if one can be certain, that there is no corrosion on the friction surface. E.g. after a couple of brake actuations which in most cases clean the disc from dirt. Therefore, the method may only be carried out, when at least one predetermined brake actuation (for example characterized by brake torque, brake pressure, number of actuations) has been carried out. Also a smart choice of the moment of time in which the measurement is carried out may lead to the desired result. Similar as with the corrosion the measurement only could be done after a couples of brake events, additionally the rain sensor signal could be used, when there is no rain and also dry road the probability of dirt sticking to the brake disc is reduced significantly.

Boundary condition frequency of carrying out: The frequency of carrying out the method may be taken into account, since a certain amount of disc wear probably is accepted the measurement does not have to be carried out in high frequency, maybe one measurement per weak or after a predetermined distance (e.g. 1000 km) may be sufficient. Also manually initiated carrying out of the method is possible. These also could be initiated online by the vehicle owner (also for complete vehicle fleets), then the vehicle may use the next opportunity (when all necessary boundary conditions are fulfilled) to fulfill the request and to send the results back to the owner.

Boundary condition frequency of carrying out depending on wear: The frequency has not to be constant over the disc life-time. When a predetermined state of wear is determined, the frequency of carrying out may be increased. I.e. if a new disc was just installed a wear determining is obligate for a long distance and time period. In this case the first determining could be done after driving for a first predetermined time period like half a year or a first predetermined distance like 50.000 km. The second determining may be carried out after a second predetermined time period like three months or a second predetermined distance like 25.000 km. The second period of time is smaller than the first period of time. The second distance is smaller than the first distance. A third period of time is smaller than the second period of time. A third distance is smaller than the second distance. With these decreasing intervals for carrying out the determining, an efficient and useful determining of the wear can be carried out.

Also a similar criterion could be given by the use of the wear sensors of the brake pads lining material. Since the lining material wear is more massive in all applications one can be sure, that the wear of the disc only has to be determined, if at least one lining material sensor reports a significant wear of the brake pad. If there was determined a certain wear of the coated brake disc in former determinations the frequency of carrying out may also be increased in order to be able to determine a critical wear state as precise as possible, but also as efficiently.

As a particular embodiment of the method according to the invention, the establishing and/or evaluating of boundary conditions for detecting the at least one wear characteristic of the friction surface according to step S2 may comprise the following checks of boundary conditions.

In case of a contact-based detecting of the wear characteristic, there may be the following checks carried out in step S2:
1. Check whether a determining is necessary
   a. Providing the last known wear state of the brake disc.
   b. Depending on this wear state, checking if the exceed has traveled a certain predetermined distance or has traveled for a predetermined period of time, in particular since the last determining.
2. If determining is necessary, checking if the friction surface is free from corrosion and dirt?
   a. Checking if it is raining (e.g. by using the rain sensor).
   b. Checking if the road dry (e.g. by using a camera or information from a vehicle stability program).
   c. Did the vehicle carry out a predetermined number of brake events in the last few hours?
3. If yes, check if the disc temperature is most probably below the desired threshold? E.g., measure the brake temperature, or is the vehicle in stand-still for at least a few hours?
4. If yes, is the vehicle in stand-still?
   a. Checking if the wheel rotates.
   b. Checking if the parking-brake applied.

In case of a non-contact detecting of the wear characteristic, there may be the following checks carried out in step S2:
1. See above (contact-based)
2. See above (contact-based)
3. If yes, measure the disc temperature as good as possible.
4. Check if the vehicle moving
   a. Measure the wheel speed.

Further, the detecting of the wear characteristic according to step S3 and the determining of the wear state according to step S4 may be carried out.

According to a further aspect of the invention, a friction brake is provided. The friction brake comprises:
- a wear element for frictional force transmission, preferably as it is described below, comprising
   a base element, a protective coating and a friction surface for frictional force transmission, wherein
   the base element comprises a non-even surface with at least one projection, wherein the protective coating is provided on the non-even surface to at least partially form the friction surface in an unworn state of the wear element;
   - a friction counter element configured to get in frictional contact with the at least one friction surface of the wear element;
   - detection means configured to detect at least one wear characteristic of the friction surface; and
   - control means configured to carry out the method as described above.

Preferably, the friction brake is configured as a disc brake, wherein the wear element is configured as the brake disc.

Further, it is clear for a person skilled in the art, that features related to detection means, the wear element or the brake mentioned above in the description of the method may as well be seen as features of the friction brake.

According to a further aspect of the invention, a vehicle, in particular a commercial vehicle, is provided comprising a friction brake as described above.

In the following, the wear element is described more in detail. The method as described above is preferably applied to such a wear element.

Preferably, the wear element comprises a base element, a protective coating and a friction surface for frictional force transmission. The base element comprises a non-even surface with at least one projection, wherein the protective coating is provided on the non-even surface to at least partially form the friction surface in an unworn state of the wear element.

According to one aspect of wear element, the protective coating completely covers the non-even surface and in particular the at least one projection. I.e. in an unworn state, the friction surface is formed only by the protective coating, wherein due to increasing wear, of the friction surface, material of the protective coating is reduced. Therefore, the at least one projection gets finally uncovered and forms a part of the friction surface. This corresponds to a worn state of the wear element.

According to another aspect of wear element, in the unworn state of the wear element, the protective coating partially covers the at least one projection. I.e. the friction surface is partially formed by the protective coating, wherein another part of the friction surface is formed by the uncovered part of the at least one projection. In particular, this configuration is advantageous if the use of the protective coating alone would lead to a friction coefficient that is too low to fulfil the requirements for of the friction surface. Therefore, the friction coefficient of the whole friction surface may be increased, when a percentage of area of the friction surface is formed by the at least one projection, wherein the other percentage of area may be formed by the protective coating. Compared to the aspect above, wherein the coating completely covers the at least one projection, this aspect leads to higher particle emissions due to the at least one projection as part of the friction surface. However, compared to the state of the art, the friction coefficient of the friction surface is adjustable.

If the non-even surface comprises at least two projections, these at least two projections may be provided evenly spaced on the non-even surface. In particular, if the non-even surface is a circular surface or a ring shaped surface, these at least two projections may be spaced by an angle of 180°. Three projections may be evenly spaced by an angle of 120° and four projections may be evenly spaced by an angle of 90°. In general, the angle for an even arrangement of the projections on such a non-even surface may be calculated by dividing 360° by the number of projections on the non-even surface. However, other designs of the non-even surface and other arrangements of at least two projections are possible as well.

Preferably, the at least one projection extends 1 mm or less in a direction from the base element to the at least one friction surface and perpendicular to the at least one friction surface.

The non-even surface may be a plane or regular surface, wherein the at least one projection provided on the non-even surface is an irregularity, whereby the non-even surface is characterised.

Preferably, the at least one projection is provided on the whole non-even surface.

Preferably, the non-even surface may be provided only on a portion of the base element. I.e. the friction surface may extend beyond this portion and there be formed by another portion of the base element.

Preferably, the protective coating comprises or consists of tungsten carbide or titanium carbide. Preferably, the base element and/or the at least one projection comprises or consists of steel or of grey cast iron. Further preferably, the base element and the at least one projection are formed as one piece.

The protective coating itself needs to have sufficient properties itself. So that also an unworn disc with 100% coating achieves a sufficient result during the frictional force transmission. In particular, the friction coefficient of the protective coating must fulfil a certain threshold.

Advantageously, the protective coating protects the base element from wear due to the frictional force transmission, since the protective coating forms at least partially the friction surface. In the unworn state, the non-even surface of the base element may be covered completely or at least partially by the protective coating. The coating may form a flat or even friction surface. Here the base element has a non-even surface due to the at least one projection, wherein the protective coating compensates this by a non-constant layer thickness. Applying the protective coating by die coating may lead to such a result. Alternatively, the protective coating may also form a non-even surface. In particular this may be the result of applying the protective coating with a constant layer thickness, wherein the protective coating approximates the shape of the non-even surface, in particular of the at least one projection. Advantageously, this embodiment leads to a friction surface that may comprise channels for fluids (e.g. water or oil) that are unintentionally on the friction surface and that would negatively affect the frictional force transmission. The fluids may be led away from the friction surface via the channels. The shape of the channels may be designed by the space between individual projections and by the thickness of the protective layer.

For frictional force transmission, a friction counter element may be in contact with the at least one friction surface and therefore, the protective coating wears off with each frictional force transmission. Since the non-even surface is coated at least partially by the protective coating, wear due to frictional force transmission is reduced with respect to the material of the base element or completely avoided. When the protective layer is worn, the non-even surface, in particular one or more of the projections on the non-even surface are now no longer covered by the protective coating and form a part of the friction surface. If frictional force transmission shall be carried out now, the friction counter element gets in contact with the uncovered projections. However, due to the non-even surface, there is still protective coating between the uncovered projections. Therefore, the friction surface in this worn state is formed partially by the protective coating and partially by the uncovered projections. This leads to the advantage compared to the state of the art that when the protective coating is worn out, in particular rubbed off completely or partially, the particle emissions due to the wear of the uncovered base element are reduced, since only the uncovered projections are subject of wear and in contact with a friction counter element. The at least one friction surface comprises still areas between the uncovered projections formed by the protective coating. Therefore, compared to the state of the art, wherein an even surface without projections is used, the area of material of the base element which is in contact with the friction counter element is reduced and therefore, the particle emissions are reduced as well.

Different designs of the wear element of the projections and of the coating are possible. These aspects and further aspects are described in the following as advantageous embodiments of the invention.

Preferably, in the unworn state, the at least one projection is partially or completely covered by the protective coating. A complete covering of the at least one projection has the consequence that the protective coating alone forms the friction surface in the unworn state of the wear element. The projection as part of the base element does not form a part of the friction surface in the unworn state according to this design. Only when the wear of the wear element increases, the protective layer gets worn off and the at least one projection becomes uncovered. In this worn state the friction surface is formed by the at least one projection that is now uncovered and by the protective coating that is located on the non-even surface between the projections. According to another aspect, in the unworn state, the at least one projection on the non-even surface is not completely covered by the protective coating. Instead, the at least one projection on the non-even surface is partially covered by the protective coating. In comparison to the complete covering of the projection, less material of the protective coating is needed to form the friction surface, if it is assumed that the geometry of the non-even surface and of the at least one projection is identical. However, according to this aspect, a friction surface is formed comprising a surface formed partially of the protective coating that is provided on the non-even surface between the at least one-projections and partially of the at least one projection. Starting from the unworn state, the at least one projection is subject to wear during frictional force transmission when the friction surface is in contact with a friction counter element. However, compared to the state of the art, wherein an even surface without projections is used, the area of material of the base element which is in contact with the friction counter element is reduced and therefore, the particle emissions are reduced as well.

Preferably, the cross-section area of the at least one projection is constant or increasing in a direction from the at least one friction surface to the base element and perpendicular to the at least one friction surface. I.e. projections comprising increasing cross-sections form an increasing percentage of the friction surface with increasing wear, since the at least one projection is worn off from a relatively small cross-section to a bigger cross-section. If the at least one projection comprises constant cross-section areas there are the following possible states depending of the wear of the wear element:
A) In the unworn state, if the protective coating covers the at least one projection completely, no particle emissions due to wear of the at least one projection are generated, since, in this state, the at least one projection is not part of the at least one friction surface. In this state the at least one friction surface is located above the at least one projection. The only particle emission that occurs due to wear is caused by the protective coating in this state. However, these emissions are significantly lower compared to particle emissions caused by the at least one projection.
B) If the at least one projection is uncovered from the protective coating due to wear during the frictional force transmission, particle emissions are generated.
C) There may be a third state: If the at least one projection is configured to be completely worn off, frictional force transmission is then carried out by contacting the friction counter element with the surface of the wear element that had comprised at least one projection to form the non-even surface. Since there are no more projections on this surface any more since they have been worn off, the surface is now even. Since there are no more projections on the surface, the protective coating is worn off in this state as well. I.e. in this state, the biggest amount of particle emissions occurs, since the friction counter element is now in direct contact with the base element and the friction surface is now formed only by the base element without any material of the protective coating. This refers to a wear element, in particular a brake disc, known from the state of the art without any protective coating.

In addition to the aspect of the increased particle emissions, the transitions from state A) to state B) and from state B) to state C) may cause changes in of other properties of the wear element as well. As the percentage of area of the at least one projection is increased due to wear of the protective coating, the friction coefficient and/or the thermal properties of the friction surface may change. This could result in a changed, at worst reduced, brake performance. Further, the wear speed of the wear element may now change, at worst increase, since the material of the at least one projection or of the base element (e.g. steel) is worn off more easily during frictional force transmission. As a result after some time also the rotatory stiffness of the brake disc may decrease, which is safety relevant. However, by shaping the projections with an increasing cross-section area in a direction from the at least one friction surface to the base element and perpendicular to the at least one friction surface transition between the states A), B) and C) may be smoother and the reduced brake performance may not occur abruptly.

Embodiments comprising only partially covered projections with constant cross-section areas are in the second state B) as described above when the wear element is unworn. When wear increases, they stay in the second state B). Optionally, they transit to the third state C) when wear occurs further. However, these embodiments are never in the first state A).

According to this embodiment, the transition between the states A) and B) and further between the states B) and C) is relatively hard. I.e. coming from state A), as soon as the protective coating is worn off such that the at least one projection is uncovered, the wear element is now in state B). In this state, the particle emissions due to the additional wear of the projections have increased. However, this particle emissions stay constant due to the constant cross-section areas of the at least one projections. Further, the particle emissions increase again, when the at least one projection is completely worn off and the wear element is now in state C). I.e. there are sudden changes in the particle emissions when the wear element changes from state A) to B) and from B) to C), wherein the emissions are nearly constant when the wear element is in the respective state.

By shaping the at least one projection with increasing cross-section area, in particular with a continuously or gradually increasing cross-section area, continuously or gradually increasing particle emission in state B) can be realized. I.e. with increasing wear of the wear element, the friction surface is formed of the protective coating and of the at least one projection, wherein the area percentage of the at least one projection increases and of the protective coating decreases.

The at least one projection preferably comprises a convex or a concave shape. A concave shape allows storing protective coating material in the concave recess to form a part of the friction surface.

Preferably, the at least one projection is shaped like a saw tooth, a triangle, a trapezoid, a cam or a part of a sphere. These embodiments of the at least one projection are examples for embodiments with an increasing cross-section area in a direction from the at least one friction surface to the base element and perpendicular to the at least one friction surface.

Preferably, at least two projections may be connected with each other. Further preferably, the connected projections may form spaces. These spaces may be formed as holes in a surface formed of the connected projections. In particular, the spaces may comprise a ground surface that acts as the non-even surface, wherein the material forming the projections is provided on that surface. According to a particular embodiment of the invention, the connected projections may form a surface with blindholes.

Preferably, the at least one projection is formed integrally with the base element. I.e. the at least one projection consists of the same material as the base element. In particular, the base element and the non-even surface with the at least one projection may be produced by casting or by removing of material from the base element to form the non-even surface with the at least one projection.

Alternatively, the at least one projection is formed as a separate part attached to a surface of the base element to form the non-even surface. I.e. the at least one projection may be detached for maintenance or replacement, when the at least one projection is worn.

Preferably, the at least one friction surface is configured to get in contact with a friction counter element for frictional force transmission between the wear element and the friction counter element, wherein the friction counter element is pressed on the at least one friction surface. In particular, the at least one friction surface is subject to wear upon contact with the friction counter element during frictional force transmission. Preferably, the friction counter element is pressed perpendicular onto the friction surface. Further preferably, for establishing the contact with the friction counter element, the wear element is configured to be moved towards the friction counter element and/or the friction counter element is configured to be moved towards the wear element.

Preferably, in an unworn state, the at least one friction surface comprises a percentage of area of 100 % or less but larger than 0 % consisting of the protective coating, wherein in a worn state, the percentage of area consisting of the protective coating is decreased compared to the unworn state. I.e. the particle emissions due to wear of the base element are reduced compared to a wear element of the state of the art, wherein in the worn state, the protective coating is completely worn off. Additionally or alternatively, in the worn state, the at least one friction surface comprises a percentage of area greater than 0% of material of the base element.

Preferably, the wear element comprises a rotational axis and is configured to rotate around this axis. According to this embodiment, the wear element may be used for frictional force transmission to a rotating element like a rotating shaft the wear element is attached to.

Preferably, the wear element is configured as a disc with an axis concentric to the rotational axis of the wear element. Preferably, at least one side of the disc the rotational axis is oriented perpendicular to is configured as the at least one friction surface. Additionally or alternatively, the at least one projection is provided concentrically or radially to the rotational axis. An at least one projection extending around the rotational axis in a circular manner may be provided. This at least one projection may advantageously be formed by milling a groove around the rotational axis or by turning on a lathe, wherein the at least one projection is then formed by the part of the base element that was not removed. As further manufacturing processes, erosive methods are possible that may use specialized tools for grinding. Further, embossing the base element e.g. by using a roller is possible as well. Further, when the wear element is worn, this state is visible, since a pattern of concentric circles emerges on the at least one friction surface. These circles may be optically distinguishable since they consist of different materials (the material of the protective coating and the material of the at least one projection). Further, if the at least one projection comprises an increasing cross-section area in a direction from the at least one friction surface to the base element and perpendicular to the at least one friction surface, the pattern changes due to wear and the areas formed by the at least one projection increase whereby the areas formed by the protective coating decrease. When the at least one projection is provided radially to the rotational axis, advantageously, the protective coating is supported against lateral forces applied during the frictional force transmission from a friction counter element that is in contact with the at least one friction surface. The support of these lateral forces may be realized in parallel to the at least one friction surface by supporting the lateral forces by a side face of the at least one projection.

According to a particular embodiment of the wear element, the wear element is configured as a brake disc and the at least one friction surface is configured to get into frictional contact with at least one brake pad acting as friction counter element. According to this embodiment, the wear element may be used for frictionally transmitting a braking force applied by the friction counter element to a wheel of a vehicle. Preferably, both sides of the brake disc are configured as friction surfaces, in particular as described above, and configured to get in frictional contact with at least one brake pad acting as friction counter element on each side. Both friction surfaces are configured as the surfaces of the brake disc oriented perpendicular to the rotational axis of the brake disc. Preferably, the friction surfaces are formed as concentric ring surfaces with respect to the rotational axis of the wear element.

According to the description above, the invention provides a wear element that can be used for frictional force transmission in particular in a friction brake. Advantageously, compared to the state of the art, the particle emissions of the wear element are decreased, since in a worn state of the wear element, the friction counter element is not immediately in exclusive contact with the material of the base element. Instead, a friction surface comprising material of the protective coating and of the at least one projection, is provided in the worn state and therefore, a smoother transition from the unworn state to the worn state is realized.

Preferably, the wear element may be configured to be refurbished, when the protective coating is at least partially worn off, preferably when the at least one projection is uncovered from the protective coating and in particular when a pattern as mentioned above is visible. In this state that may correspond to state B) as mentioned above, refurbishing of the protective coating may be carried out, wherein a new protective layer is applied to the wear element to at least partially cover the at least one projection and to form a new friction surface. Preferably, for that, remaining material of the old protective coating in particular between the projections is removed first.

In the following, further aspects of the invention are described. For the person skilled in the art it is clear that features and aspects of the wear element described above, may be transferred to these aspects to describe preferred embodiments according to these aspects as well.

In the following, preferred embodiments of the invention are described, wherein reference is made to the attached drawings.

In detail,
Figures 1a-c show a first embodiment of a wear element,
Figures 2a-b show a second embodiment of a wear element,
Figures 3a-c show a third embodiment of a wear element,
Figure 4 shows a friction brake,
Figures 5ac show possibilities to determine the wear characteristic electrically,
Figures 6a-b show a possibility to determine the wear characteristic inductively,
Figure 7 shows a possibility to determine the wear characteristic optically.

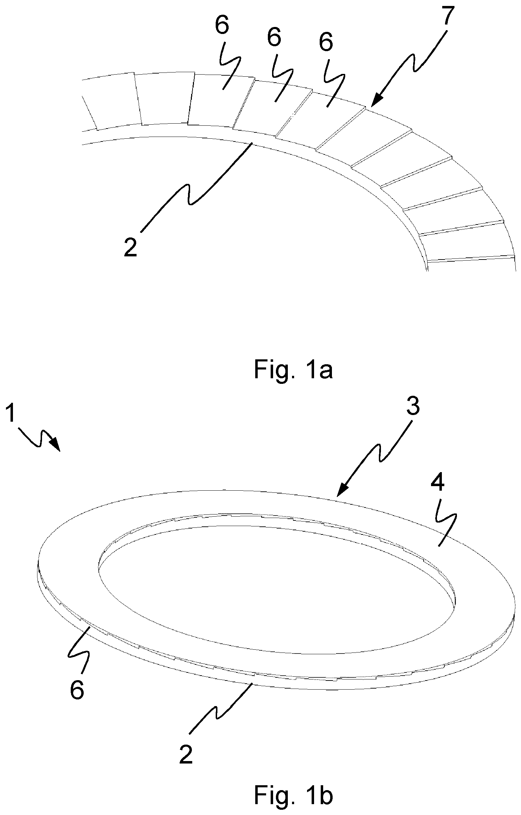

**Figures 1a****-c** show a first embodiment of a wear element according to the invention.

In Figure 1a, a simplified partial perspective view of a base element 2 of the wear element 1 is shown. The base element 2 is configured as a disc or disc ring.

On the upper side of the base element 2 a non-even surface 7 is provided, wherein the non-even surface 7 comprises projections 6 comprising a saw tooth shape and provided radially to the centre of the base element 2.

Figure 1b shows a perspective view of the wear element 1, wherein the projections 6 of the base element 2 are completely covered by a protective coating 3, wherein a friction surface 4 is formed by the protective coating 3 on the upper side in the drawing. In this unworn state of the wear element 1, the projections 6 are completely covered by the protective coating 3 and frictional force transmission to a friction counter element (not shown) may take place only via the material of the protective coating 3.

If the wear element 1 is provided rotatable clockwise around its centre, the protective coating may support the friction force applied by the friction counter element to the steep sides of the projections 6. This is an advantage of the radial orientation of the projections compared to a concentric design. Further, due to the saw tooth design, an optical check of the wear state is possible, since the percentages of area of the friction surface 4 formed by the projections 6 increase when the wear element 1 is more and more worn, wherein the percentages of area of the friction surface 4 formed by the protective coating 3 decrease.

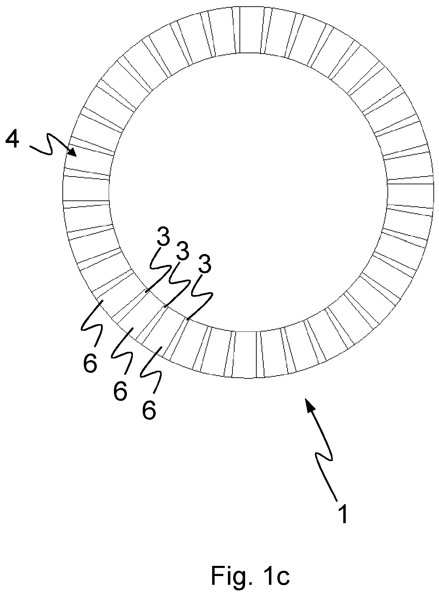

Figure 1c shows a top view of the wear element 1 in such a worn state. Here, an alternating pattern of the protective coating 3 and the partially uncovered projections 6 appear, wherein the friction surface 4 is formed by this alternating pattern.

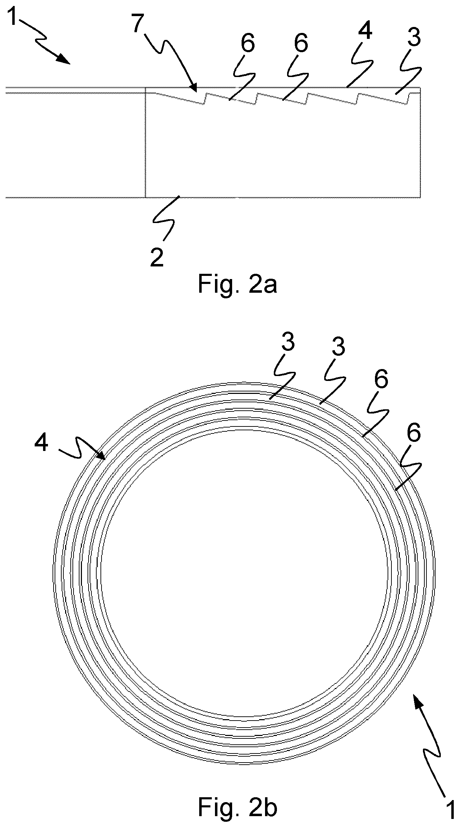

**Figures 2a****-b** show a second embodiment of a wear element according to the invention.

As it can be seen by Figure 2a showing a cross sectional view of a wear element 1, that is shaped like a disc or a disc ring, projections 6 shaped like saw-teeth are concentrically provided on the base element 2 to form a non-even surface 7.

The projections 6 are completely covered by a protective coating 3 in this unworn state. I.e. the friction surface 4 is formed completely by the material of the protective coating 3. When the protective coating 3 above the projections 6 is worn off the projections 6 are partially uncovered.

This state is shown in Figure 2b. Here the state of wear can easily be verified by checking the radial distances between the alternating ring pattern. For example, the radial distance between one ring consisting of the protective coating 3 to the next ring consisting of the protective coating 3 can be used as a wear indicator, wherein the wear has increased when the distance has increased. Alternatively, a distance between two rings consisting of the material of the projections 6 may be used as such an indicator as well. However, with increasing of wear, the radial distance between these rings decreases.

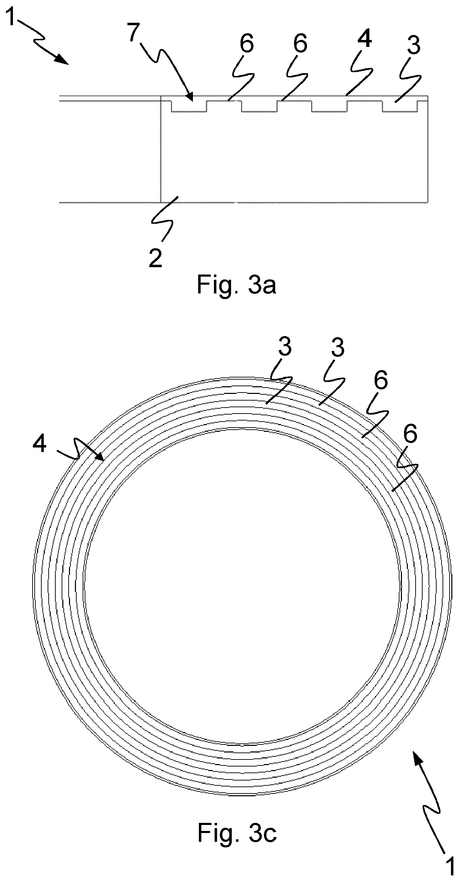

**Figures 3a****-c** show a third embodiment of a wear element according to the invention.

This embodiment is similar to the embodiment shown by the Figures 2a-b. Here, as it can be seen in Figure 3a, instead of a saw-tooth shape, the projections 6 comprise a unitary step shape, wherein the projections 6 are separated by grooves and the protective coating 3 covers the projections 6 and the grooves to form a friction surface 4 consisting exclusively of the material of the protective coating 3 in this unworn state.

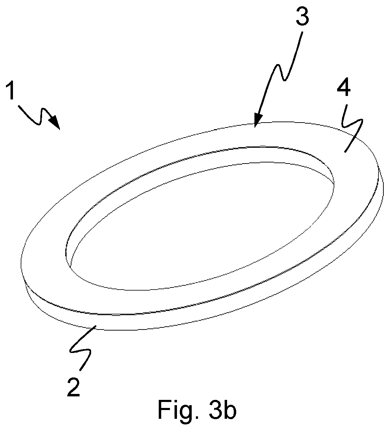

Figure 3b shows a perspective view of the unworn wear element 1, wherein the friction surface 4 is completely formed by the protective coating 3.

When the wear of the wear element 1 increases, the protective coating 3 is rubbed off and the projections 6 are uncovered. In this state, the friction surface comprises areas consisting of the material of the protective coating 3 and other areas consisting of the projections 6 and a concentric ring pattern emerges as it can be seen in Figure 3c showing a top view of the wear element 1. Here, due to the constant cross sectional area of the projections in a direction to the base element, it can only be seen that the wear element 1 is in a worn state with uncovered projections 6, however, no evaluation of the wear state is possible, since the area percentages of the friction surface consisting of material of the projections 6 and of the protective coating 3 stays constant during increasing wear.

However, forming projections 6 according to this unitary step shape is easier to realise, since the projections, or the grooves between the projections can for example be created by milling.

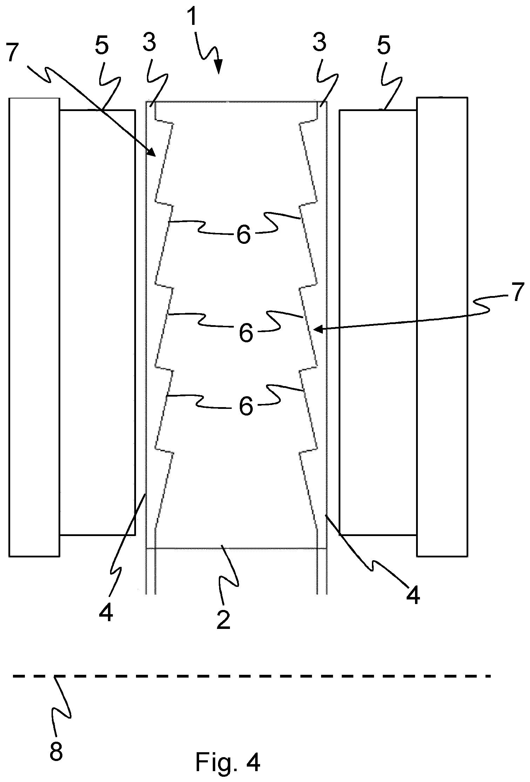

**Figure 4** shows a friction brake according to the invention.

A cross section of a friction brake, in detail a disc brake, is shown. The wear element 1 acts as a brake disc that is oriented perpendicular to the drawing plane. The wear element 1 comprises a base element 2 that is provided rotatable around an axis extending in the drawing plane in a horizontal direction. For simplicity, all parts of the disc brake under the rotational axis are not shown.

The base element 2 comprises projections 6 on each side (in the drawing the left and right side of the base element 2). These projections 6 form a non-even surface 7 of the base element 2, respectively. The projections 6 comprise the shape of concentric saw teeth with respect to the rotational axis 8, however, other shapes and orientations as described above are possible as well.

The non-even surface 7 is coated with a protective coating 3, wherein the projections 6 in this unworn state of the wear element 1 are completely covered by the protective coating 3. However, according to other aspects of the invention, the protective coating may only partially cover the projections 6 in the unworn state as described above.

The outer surfaces of the wear element 1 face to the left and to the right in the drawing. The rotational axis 8 is oriented perpendicular to these outer faces. These outer faces form friction surfaces 4. These friction surfaces 4 are configured to get in frictional contact with the brake pads of the disc brake acting as friction counter elements 5. These friction counter elements 5 are fixed only movable in a direction in parallel to the rotational axis 8. I.e. they are only movable in a horizontal direction in the drawing. To establish a frictional contact between the friction surfaces 4 and the respective friction counter element 5, the friction counter elements 5 are moved towards the respective friction surface 4. I.e. the left friction counter element 5 is moved to the right and the right friction counter element 5 is moved to the left. To apply the frictional force to the wear element 1, the friction counter elements 5 are pressed onto the respective friction surface 4, leading to a braking effect to the wear element 1 rotating around the rotational axis 8.

In the drawings or in general as a further aspect of the invention, it can easily be seen that the protective coating 3 not only covers the projections 6. Further, in the unworn state, there is a material reserve of the protective coating 3 above the projections 6. I.e. to uncover the projections 6 due to wear and to reach a state, wherein the friction surface 4 comprises percentages of area of the material of the protective coating 3 and percentages of area of the material of the projections 6, this material reserve has to be worn off first. Therefore, to extend the life cycle of the wear element 1, the material reserve of the protective coating 3 may be increased.

In particular, when the wear element is used as a brake disc, the invention allows a smooth transition from a coated wear element to a partially or no longer coated wear element. This gives an operator time and a mileage window, in which wear can be detected and a maintenance of the brake can be accomplished without violating the respective Euro norm.

Further, methods for determining the wear state of the friction surface are described, to fulfill the respective Euro norm or in general to avoid violating legal requirements.

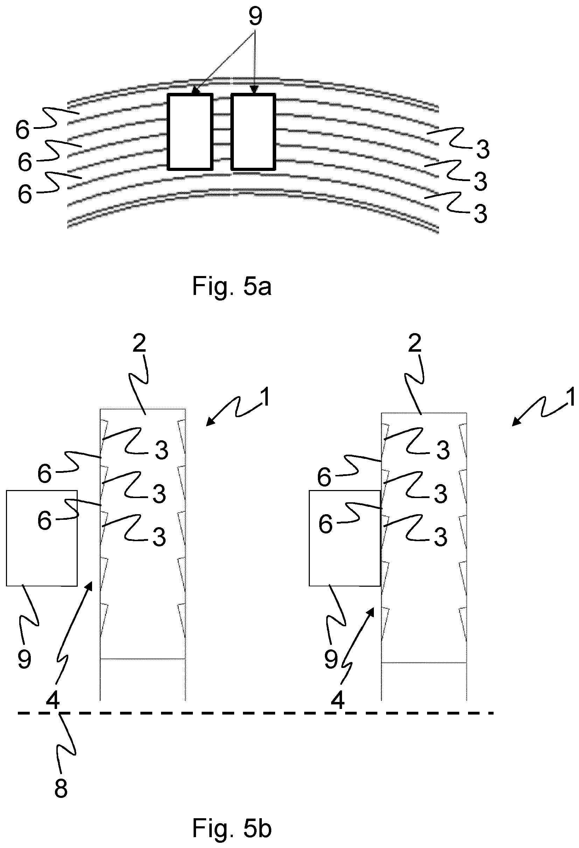

**Figures 5a****-c** show possibilities to determine the wear characteristic electrically.

Figure 5a shows a top view of a section of a wear element 1, configured as a disc, in particular a brake disc, with a rotational axis concentric to the central axis of the disc and perpendicular to the drawing plane, wherein a friction surface 4 of the wear element 1 is shown in parallel to the drawing plane. On the friction surface 4, a pattern of projections 6 is shown, wherein the projections 6 are arranged concentrically to the rotational axis of the wear element 1. In the space between the projections 6 material of the protective coating 3 is comprised. The shown state of the wear element 1 corresponds to a state, wherein the friction surface 4 is at least partially worn and wherein the protective coating 3 is at least partially worn off from the projections 6.

Further, two electric contacts of a detection means 9 (not completely shown) are shown from above, wherein the detection means is configured to determine the electric surface resistance of the friction surface 4 by applying a predetermined electric voltage or a predetermined electric current between the electric contacts using the friction surface 4 as electric connection between the contacts. Since depending on the wear of the friction surface 4, the electric connection between the contacts comprises a different material composition, the electric resistance of the friction surface 4 differs and can be used as a wear characteristic, the wear status of the friction surface 4 may be determined from.

This method is only applicable during standstill of the wear element, in particular when it is configured as a brake disc. In this case, it is preferred to establish the connection between the electric contacts via the friction surface 4, when the parking brake is applied and it is ensured that the disc does not move.

As an initial measurement the temperature of the friction surface 4 may be determined and the further method may only be continued if the temperature is below a predetermined threshold to ensure that no damage to the electric contacts occurs. After that, the electric contacts of the detection means 9 are moved to the friction surface 4 until they touch the disc surface as it is shown in Figure 5b. The left drawing shows a cross sectional view of the wear element 1, wherein one of the electric contacts of the detection means 9 is shown on the left side with no contact established to the friction surface 4. The right drawing of Figure 5b shows the state, when the electric contacts of the detection means 9 (the second contact is located behind the shown contact) is in contact with the friction surface. As it can be seen in this cross section view, the electric contact touches partially material of the protective coating 3 and partially material of the projections 6. Due to the wear status of the friction surface 4, the percentage of material of the protective coating 3 and material of the projections 6 differs. This leads to a different electric resistance in the friction surface 4 which can be determined by the detection means 9 as a wear characteristic. After the electric resistance had been determined, the electric contacts are moved back to their initial position shown in the left drawing of Figure 5b.

The temperature of the friction surface 4 is relevant in two ways. First, the determination of the electric resistance is only feasible while the temperature is not exceeding a certain threshold temperature to avoid damage of the contacts as described above. Secondly, the temperature is also a quantity of interest in the calculation of the electric resistance. From the electric resistance, now a certain material combination on the disc surface can be calculated (e. g. 30% coating/ 70% steel at the projection 6). With that a good approximation of the wear status can be achieved. Further, it is possible to take the temperature of the friction surface 4 into account of the determination of the electric resistance, since the electric resistance usually depends on the material temperature. Usually, in steel, the electric resistance increases when the material temperature increases.

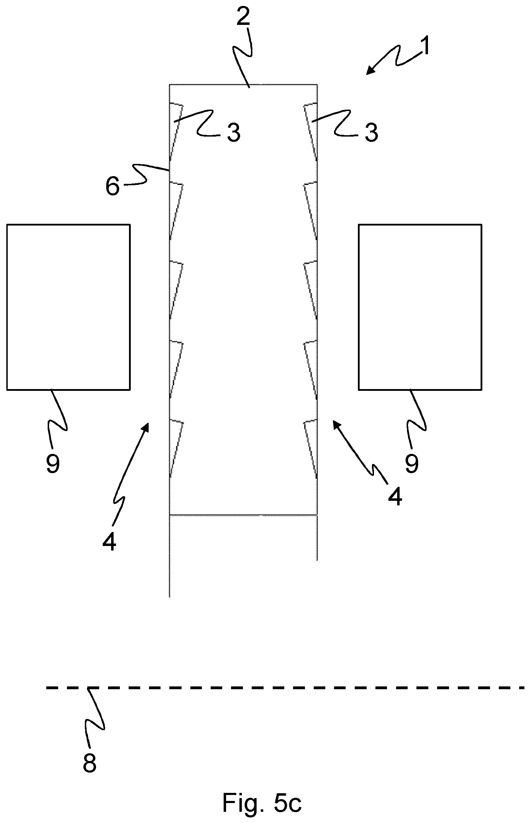

Figure 5c shows a further possibility to determine the electric resistance of the friction surface 4. This embodiment is preferred when the wear element 1 is accessible from both sides. The wear element 1 shown in this drawing is identical to the wear element 1 shown in Figures 5a and 5b, however, the electric contacts of the detection means 9 are not touching the same friction surface 4. Instead, each contact is intended for touching a different friction surface 4 of the wear element 1. I.e. an electric connection is established between the contacts via the both friction surfaces 4 and the base element 2. However, the determination of the electric resistance of this connection may be carried out as described to Figure 5a and 5b. Due to wear of the friction surfaces 4, the amount of material of the friction surface 4 is reduced and therefore, the amount of material forming the electric connection between the contacts is reduced. This results in a change of the electric resistance of this connection and therefore, the electric resistance may be used as a wear characteristic.

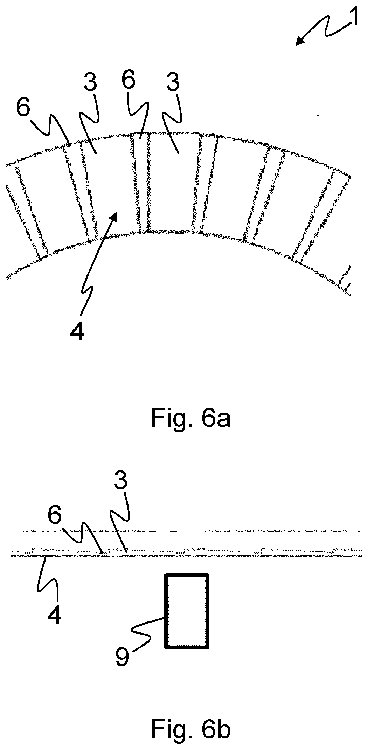

**Figures 6a****-b** show a possibility to determine the wear characteristic inductively.

Figure 6a shows a top view of a section of a wear element 1, configured as a disc, in particular a brake disc, with a rotational axis concentric to the central axis of the disc and perpendicular to the drawing plane, wherein a friction surface 4 of the wear element 1 is shown in parallel to the drawing plane. On the friction surface 4, a pattern of projections 6 is shown, wherein the projections 6 are arranged radially to the rotational axis of the wear element 1. In the space between the projections 6 material of the protective coating 3 is comprised. The shown state of the wear element 1 corresponds to a state, wherein the friction surface 4 is at least partially worn and wherein the protective coating 3 is at least partially worn off from the projections 6.

Figure 6b shows an inductive detection means 9, wherein the detection direction of the detection means 9 is provided perpendicular to the friction surface 4.

When the wear element 1 rotates around the rotational axis, the friction surface 4 comprising the projections 6 and the protective coating 3 is relatively moved with respect to the detection means 9. This leads to a typical signature in the electric voltage induced in the inductive detection means 9 due to the different magnetic permeability of the material of the protective coating 3 and of the projections 6. Since the composition of the friction surface 4 is changed by increasing wear, the magnetic permeability of the friction surface 4 is changed as well since the percentages of material of the protective coating 3 and of the projections 6 change. Therefore, the voltage signature depends on the wear status of the friction surface 4, and may be used as a wear characteristic.

If the wear element 1 is used as a brake disc, for this method a relative movement between the friction surface and the detection means 9 is optimal. I.e. it is possible to determine the wear status of the wear element 1 while the vehicle is moving.

The inductive detection means 9 may comprise a permanent magnet or a solenoid.

This principle is also used for passive wheel speed sensors (e.g., KB DF4.1). With the help of this measurement and the wheel speed sensor now a certain friction state can be calculated from the signals. Also, the application of an active wheel speed sensor (e.g., KB aWSS) instead of the passive induction sensor could be promising. Here also a magnetic field and a permanent magnet is used, but instead of an inductor, there is a semi-conductor chip used, which has additional benefits (e.g., temperature measurement near the disc). One benefit of the concept in comparison to the concept according to Figures 5a-c is, that the sensor has not to be moved and has no contact to the disc for measurement.

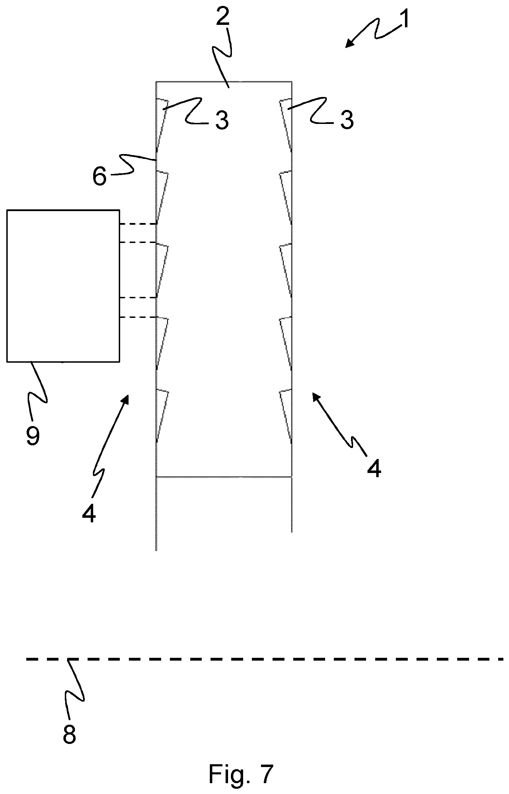

**Figure 7** shows a possibility to determine the wear characteristic optically.

A wear element 1 configured as a disc, in particular as a brake disc, is shown in a sectional view, wherein the wear element may be identical to the wear element 1 shown in Figures 5a-c.

Facing the left friction surface 4, an optical detection means 9 is provided, wherein the optical detection means detects a pattern on the friction surface 4 as a wear characteristic. The pattern itself is formed of material of the protective coating 3 and of the at least one projection 6. Since the protective coating 3 and the at least one projection 6 consist of different material, a pattern can be optically detected that changes with increasing wear. In the unworn state, the at least one projection 6 may be completely covered by the protective coating 3, wherein due to increasing wear, the projection 6 get more and more uncovered and the pattern 3 consisting of both, the protective coating 3 and the at least one projection 6, changes optically. In particular, a pattern of altering stripes may occur. Such pattern is detected optically by the detection means 9 in the shown state, wherein one stripe is defined by a projection 6, wherein an adjacent stripe is defined by material of the protective coating 3 that is located in a space between two projections 6.

The optical detection means 9 may comprise a camera, wherein the camera detects visual information from the friction surface 4. Additionally or alternatively, the optical detection means 9 comprises a light source, in particular a laser or an IR light source, and a detection element, wherein the light source emits light (laser light or IR light) to the friction surface 4 that is reflected by the friction surface 4 and detected by the detection element wherein the reflected light acts as a wear characteristic.

Using optical detection means does not necessarily need to keep the wear element in stand still. There may be a relative movement between the wear element and the detection means as well, since then, an altering in the visual information from the friction surface is detected that may be used as a wear characteristic as well.

### LIST OF REFERENCE SIGNS

- 1: wear element
- 2: base element
- 3: protective coating
- 4: friction surface
- 5: friction counter element
- 6: projection
- 7: non-even surface
- 8: rotational axis
- 9: detection means

## Claims

1. Method for determining the wear state of a friction surface (4) of a wear element (1), wherein the wear element (1) comprises a base element (2) with a non-even surface (7) with at least one projection (6) and a protective coating (3) at least partially covering the at least one projection (6) to form the friction surface (4), wherein the method comprises the steps:
- step (S1): providing a detection means (9) configured to detect at least one wear characteristic of the friction surface (4);
- step (S2): establishing and/or evaluating boundary conditions for detecting the at least one wear characteristic of the friction surface (4);
- step (S3): detecting the wear characteristic of the friction surface (4); and
- step (S4): determining the wear state from the detected wear characteristic, wherein,
in step (S1), a contact is established between the detection means (9) and the friction surface (4), the detection means (9) is configured as an electric detection means (9) and in step (S3), the detection means (9) detects the electric surface resistance of the friction surface (4) as the wear characteristic as the percentage of area of the friction surface (4) formed by the at least one projection (6) increases, wherein the percentage of area of the friction surface (4) formed by the protective coating (3) is reduced in the same manner, if wear increases, or in step (S3), the detection means (9) is configured to detect the electric resistance through the wear element (1) when the detection means (9) is in contact with two different friction surfaces of the wear element (1), wherein two electric contacts of the detection means (9) are brought in electric contact with the two different friction surfaces of the wear element (1) and a predetermined electric current or a predetermined electric voltage is applied between both electric contacts to determine the electric resistance between the electric contacts as a wear characteristic of the wear element (1), and/or
the detection means (9) is configured as an inductive detection means (9), wherein, in step (S3), an electric voltage due to the different magnetic permeability of the material of the protective coating (3) and at least one projection (6) induced by a relative movement between the wear element (1) and the detection means (9) is detected by the detection means (9) as the wear characteristic, wherein the inductive detection means (9) faces the friction surface (4), and/or
the detection means (9) is configured as an optical detection means (9), wherein, in step (S3), the optical detection means (9) detects a pattern on the friction surface (4) as a wear characteristic, wherein the pattern is formed of material of the protective coating (3) and of the at least one projection (6), and wherein the pattern changes with increasing wear.

2. Method according to claim 1, wherein
in step (S2), an evaluation of boundary conditions for the detection is carried out, wherein in particular, the temperature of the friction surface (4) is determined and compared to a predetermined threshold.

3. Method according to claim 1 or 2, wherein
in step (S2), a relative speed between the detection means (9) and the friction surface (4) is reduced to zero or to a predetermined speed.

4. Method according to one of the proceeding claims, wherein
in step (S3), the optical detection means (9) comprises a camera wherein the camera detects visual information from the friction surface (4) and/or in step (S3), the optical detection means (9) comprises a light source, in particular a laser or an IR light source, and a detection element, wherein the light source emits light to the friction surface (4) that is reflected by the friction surface (4) and detected by the detection element, wherein the reflected light acts as a wear characteristic.

5. Method according to one of the claims 2 to 4, wherein
the detection means (9) comprise heat radiation detection means detecting heat radiation as a wear characteristic from the friction surface in step (S3), if the temperature of the friction surface (4) is above a predetermined threshold.

6. Method according to one of the preceding claims, wherein
the wear element (1) comprises a rotational axis (8) and is configured to rotate around this axis.

7. Method according to claim 6, wherein
the wear element (1) is configured as a disc with an axis concentric to the rotational axis (8), wherein at least one side of the disc the rotational axis is oriented perpendicular to is configured as the at least one friction surface (4), and/or wherein
the at least one projection (6) is provided concentrically or radially to the rotational axis.

8. Method according to one of the preceding claims, wherein
the wear element (1) is configured as a brake disc and the at least one friction surface (4) is configured to get in frictional contact with at least one brake pad acting as friction counter element (5), wherein the method is carried out to detect the wear of the at least one friction surface (4) of the brake disc.

9. Method according to one of the preceding claims, wherein
according to the wear state, an automatic maintenance planning is carried out.

10. Friction brake comprising:
- a wear element (1) for frictional force transmission, comprising
a base element (2), a protective coating (3) and a friction surface (4) for frictional force transmission, wherein
the base element (2) comprises a non-even surface (7) with at least one projection (6), wherein the protective coating (3) is provided on the non-even surface (7) to at least partially form the friction surface (4) in an unworn state of the wear element (1);
- a friction counter element (5) configured to get in frictional contact with the at least one friction surface (4) of the wear element (1);
- detection means (9) configured to detect at least one wear characteristic of the friction surface (4); and
- control means configured to carry out the method according to one of the claims 1 to 9.

11. Vehicle, in particular a commercial vehicle, comprising a friction brake according to claim 10.

## Patentansprüche

1. Verfahren zum Bestimmen des Verschleißzustands einer Reibfläche (4) eines Verschleißelements (1), wobei das Verschleißelement (1) ein Basiselement (2) mit einer unebenen Oberfläche (7) mit zumindest einem Vorsprung (6) und einer Schutzbeschichtung (3) umfasst, welche den zumindest einen Vorsprung (6) zumindest teilweise bedeckt, um die Reibfläche (4) zu bilden, wobei das Verfahren die folgenden Schritte umfasst:
- Schritt (S1): Bereitstellen eines Erfassungsmittels (9), welches dazu konfiguriert ist, zumindest ein Verschleißmerkmal der Reibfläche (4) zu erfassen;
- Schritt (S2): Herstellen und/oder Bewerten von Randbedingungen zum Erfassen des zumindest einen Verschleißmerkmals der Reibfläche (4);
- Schritt (S3): Erfassen des Verschleißmerkmals der Reibfläche (4); und
- Schritt (S4): Bestimmen des Verschleißzustands anhand des erfassten Verschleißmerkmals, wobei
in Schritt (S1) ein Kontakt zwischen dem Erfassungsmittel (9) und der Reibfläche (4) hergestellt wird, das Erfassungsmittel (9) als elektrisches Erfassungsmittel (9) konfiguriert ist und in Schritt (S3) das Erfassungsmittel (9) den elektrischen Oberflächenwiderstand der Reibfläche (4) als Verschleißmerkmal erfasst, wenn der prozentuale Flächenanteil der Reibfläche (4), welche von dem zumindest einen Vorsprung (6) gebildet wird, zunimmt, wobei der prozentuale Flächenanteil der Reibfläche (4), welche von der Schutzbeschichtung (3) gebildet wird, auf die gleiche Weise verringert wird, wenn der Verschleiß zunimmt, oder in Schritt (S3) das Erfassungsmittel (9) dazu konfiguriert ist, den elektrischen Widerstand durch das Verschleißelement (1) zu erfassen, wenn das Erfassungsmittel (9) mit zwei unterschiedlichen Reibflächen des Verschleißelements (1) in Kontakt steht, wobei zwei elektrische Kontakte des Erfassungsmittels (9) mit den zwei unterschiedlichen Reibflächen des Verschleißelements (1) in elektrischen Kontakt gebracht und ein vorbestimmter elektrischer Strom oder eine vorbestimmte elektrische Spannung zwischen beiden elektrischen Kontakten angelegt wird, um den elektrischen Widerstand zwischen den elektrischen Kontakten als Verschleißmerkmal des Verschleißelements (1) zu bestimmen, und/oder
das Erfassungsmittel (9) als ein induktives Erfassungsmittel (9) konfiguriert ist, wobei in Schritt (S3) eine elektrische Spannung aufgrund der unterschiedlichen magnetischen Permeabilität des Materials der Schutzbeschichtung (3) und zumindest eines Vorsprungs (6), welche durch eine relative Bewegung zwischen dem Verschleißelement (1) und dem Erfassungsmittel (9) induziert wird, von dem Erfassungsmittel (9) als Verschleißmerkmal erfasst wird, wobei das induktive Erfassungsmittel (9) der Reibfläche (4) zugewandt ist, und/oder
das Erfassungsmittel (9) als ein optisches Erfassungsmittel (9) konfiguriert ist, wobei das optische Erfassungsmittel (9) in Schritt (S3) ein Muster auf der Reibfläche (4) als Verschleißmerkmal erfasst, wobei das Muster aus Material der Schutzbeschichtung (3) und des zumindest einen Vorsprungs (6) gebildet ist, und wobei sich das Muster mit zunehmendem Verschleiß verändert.

2. Verfahren nach Anspruch 1, wobei:
in Schritt (S2) eine Auswertung der Randbedingungen für die Erfassung durchgeführt, wobei insbesondere die Temperatur der Reibfläche (4) bestimmt und mit einem vorbestimmten Schwellenwert verglichen wird.

3. Verfahren nach Anspruch 1 oder 2, wobei
in Schritt (S2) die relative Geschwindigkeit zwischen dem Erfassungsmittel (9) und der Reibfläche (4) auf Null oder auf eine vorbestimmte Geschwindigkeit verringert wird.

4. Verfahren nach einem der vorstehenden Ansprüche, wobei
in Schritt (S3) das optische Erfassungsmittel (9) eine Kamera umfasst, wobei die Kamera visuelle Informationen von der Reibfläche (4) erfasst, und/oder in Schritt (S3) das optische Erfassungsmittel (9) eine Lichtquelle, insbesondere einen Laser oder eine Infrarotlichtquelle, und ein Erfassungselement umfasst, wobei die Lichtquelle Licht auf die Reibfläche (4) emittiert, welches von der Reibfläche (4) reflektiert und von dem Erfassungselement erfasst wird, wobei das reflektierte Licht als Verschleißmerkmal agiert.

5. Verfahren nach einem der Ansprüche 2 bis 4, wobei
das Erfassungsmittel (9) ein Wärmestrahlungserfassungsmittel umfasst, welches Wärmestrahlung als ein Verschleißmerkmal von der Reibfläche in Schritt (S3) erfasst, wenn die Temperatur der Reibfläche (4) über einem vorbestimmten Schwellenwert liegt.

6. Verfahren nach einem der vorstehenden Ansprüche, wobei
das Verschleißelement (1) eine Drehachse (8) umfasst und dazu konfiguriert ist, sich um diese Achse zu drehen.

7. Verfahren nach Anspruch 6, wobei
das Verschleißelement (1) als eine Scheibe mit einer mit der Drehachse (8) konzentrischen Achse konfiguriert ist, wobei zumindest eine Seite der Scheibe, zu welcher die Drehachse senkrecht ausgerichtet ist, als zumindest eine Reibfläche (4) konfiguriert ist, und/oder wobei
der zumindest eine Vorsprung (6) konzentrisch oder radial zu der Drehachse bereitgestellt ist.

8. Verfahren nach einem der vorstehenden Ansprüche, wobei
das Verschleißelement (1) als eine Bremsscheibe konfiguriert ist und die zumindest eine Reibfläche (4) dazu konfiguriert ist, mit zumindest einem als Reibungsgegenelement (5) wirkenden Bremsbelag in Reibungskontakt zu kommen, wobei das Verfahren durchgeführt wird, um den Verschleiß der zumindest einen Reibfläche (4) der Bremsscheibe zu erfassen.

9. Verfahren nach einem der vorstehenden Ansprüche, wobei
gemäß dem Verschleißzustand eine automatische Wartungsplanung durchgeführt wird.

10. Reibungsbremse, umfassend:
- ein Verschleißelement (1) zur Reibungskraftübertragung, umfassend ein Basiselement (2), eine Schutzbeschichtung (3) und eine Reibfläche (4) zur Reibungskraftübertragung, wobei
das Basiselement (2) eine unebene Oberfläche (7) mit zumindest einem Vorsprung (6) umfasst, wobei die Schutzbeschichtung (3) auf der unebenen Oberfläche (7) bereitgestellt ist, um in einem nicht verschlissenen Zustand des Verschleißelements (1) zumindest teilweise die Reibfläche (4) zu bilden;
- ein Reibungsgegenelement (5), welches dazu konfiguriert ist, mit zumindest einer Reibfläche (4) des Verschleißelements (1) in Reibungskontakt zu kommen;
- Erfassungsmittel (9), welche dazu konfiguriert sind, zumindest ein Verschleißmerkmal der Reibfläche (4) zu erfassen; und
- Steuermittel, welche dazu konfiguriert sind, das Verfahren nach einem der Ansprüche 1 bis 9 durchzuführen.

11. Fahrzeug, insbesondere ein Nutzfahrzeug, umfassend eine Reibungsbremse nach Anspruch 10.

## Revendications

1. Procédé de détermination de l'état d'usure d'une surface de frottement (4) d'un élément d'usure (1), dans lequel l'élément d'usure (1) comprend un élément de base (2) présentant une surface non lisse (7) comportant au moins une saillie (6) et un revêtement de protection (3) recouvrant au moins partiellement la au moins une saillie (6) de façon à former la surface de frottement (4), dans lequel le procédé comprend les étapes :
- étape (S1) : la fourniture d'un moyen de détection (9) configuré pour détecter au moins une caractéristique d'usure de la surface de frottement (4) ;
- étape (S2) : l'établissement et/ou l'évaluation de conditions limites pour détecter la au moins une caractéristique d'usure de la surface de frottement (4) ;
- étape (S3) : la détection de la caractéristique d'usure de la surface de frottement (4) ; et
- étape (S4) : la détermination de l'état d'usure à partir de la caractéristique d'usure détectée, dans lequel,
à l'étape (S1), un contact est établi entre le moyen de détection (9) et la surface de frottement (4), le moyen de détection (9) est configuré comme un moyen de détection électrique (9) et à l'étape (S3), le moyen de détection (9) détecte la résistance de surface électrique de la surface de frottement (4) au titre de la caractéristique d'usure à mesure que le pourcentage de l'aire de la surface de frottement (4) formée par la au moins une saillie (6) augmente, dans lequel le pourcentage de l'aire de la surface de frottement (4) formée par le revêtement de protection (3) est réduit proportionnellement, si l'usure augmente, ou à l'étape (S3), le moyen de détection (9) est configuré de façon à détecter la résistance électrique par l'intermédiaire de l'élément d'usure (1) lorsque le moyen de détection (9) est en contact avec deux surfaces de frottement différentes de l'élément d'usure (1), dans lequel deux contacts électriques du moyen de détection (9) sont mis en contact électrique avec les deux surfaces de frottement différentes de l'élément d'usure (1) et un courant électrique prédéterminé ou une tension électrique prédéterminée est appliqué(e) entre les deux contacts électriques de façon à déterminer la résistance électrique entre les contacts électriques à titre de caractéristique d'usure de l'élément d'usure (1), et/ou
le moyen de détection (9) est configuré comme un moyen de détection inductive (9), dans lequel, à l'étape (S3), une tension électrique due à la perméabilité magnétique différente du matériau du revêtement de protection (3) et d'au moins une saillie (6) induite par un mouvement relatif entre l'élément d'usure (1) et le moyen de détection (9) est détectée par le moyen de détection (9) au titre de la caractéristique d'usure, dans lequel le moyen de détection inductive (9) est orienté vers la surface de frottement (4), et/ou
le moyen de détection (9) est configuré comme un moyen de détection optique (9), dans lequel, à l'étape (S3), le moyen de détection optique (9) détecte un motif sur la surface de frottement (4) à titre de caractéristique d'usure, dans lequel le motif est constitué du matériau du revêtement de protection (3) et de la au moins une saillie (6), et dans lequel le motif change en fonction d'une usure croissante.

2. Procédé selon la revendication 1, dans lequel
à l'étape (S2), une évaluation de conditions limites pour la détection est effectuée, dans lequel en particulier la température de la surface de frottement (4) est déterminée et comparée à un seuil prédéterminé.

3. Procédé selon la revendication 1 ou 2, dans lequel
à l'étape (S2), une vitesse relative entre le moyen de détection (9) et la surface de frottement (4) est réduite à zéro ou à une vitesse prédéterminée.

4. Procédé selon l'une quelconque des revendications précédentes, dans lequel
à l'étape (S3), le moyen de détection optique (9) comprend une caméra, dans lequel la caméra détecte des informations visuelles provenant de la surface de frottement (4) et/ou à l'étape (S3), le moyen de détection optique (9) comprend une source de lumière, en particulier un laser ou une source de lumière IR, et un élément de détection, dans lequel la source de lumière émet vers la surface de frottement (4) une lumière qui est réfléchie par la surface de frottement (4) et détectée par l'élément de détection, dans lequel la lumière réfléchie sert de caractéristique d'usure.

5. Procédé selon l'une quelconque des revendications 2 à 4, dans lequel
le moyen de détection (9) comprend un moyen de détection de rayonnement thermique détectant un rayonnement thermique à titre de caractéristique d'usure à partir de la surface de frottement à l'étape (S3), si la température de la surface de frottement (4) est supérieure à un seuil prédéterminé.

6. Procédé selon l'une quelconque des revendications précédentes, dans lequel
l'élément d'usure (1) comprend un axe de rotation (8) et est configuré pour tourner autour de cet axe.

7. Procédé selon la revendication 6, dans lequel
l'élément d'usure (1) est configuré comme un disque présentant un axe concentrique à l'axe de rotation (8), dans lequel au moins un côté du disque par rapport auquel l'axe de rotation est orienté perpendiculairement est configuré au titre de la au moins une surface de frottement (4), et/ou dans lequel
la au moins une saillie (6) est formée concentriquement ou radialement à l'axe de rotation.

8. Procédé selon l'une quelconque des revendications précédentes, dans lequel
l'élément d'usure (1) est configuré comme un disque de frein et la au moins une surface de frottement (4) est configurée de façon à établir un contact par frottement avec au moins une plaquette de frein faisant office de contre-élément de frottement (5), dans lequel le procédé est exécuté de façon à détecter l'usure de la au moins une surface de frottement (4) du disque de frein.

9. Procédé selon l'une quelconque des revendications précédentes, dans lequel
une planification automatique d'un entretien est réalisée en fonction de l'état d'usure.

10. Frein à friction comprenant :
- un élément d'usure (1) permettant une transmission d'une force de frottement, comprenant
un élément de base (2), un revêtement de protection (3) et une surface de frottement (4) permettant une transmission d'une force de frottement, dans lequel
l'élément de base (2) comprend une surface non lisse (7) comportant au moins une saillie (6), dans lequel le revêtement de protection (3) est situé sur la surface non lisse (7) de façon à former au moins partiellement la surface de frottement (4) dans un état non usé de l'élément d'usure (1) ;
- un contre-élément de frottement (5) configuré de façon à établir un contact par frottement avec la au moins une surface de frottement (4) de l'élément d'usure (1) ;
- un moyen de détection (9) configuré pour détecter au moins une caractéristique d'usure de la surface de frottement (4) ; et
- un moyen de commande configuré pour exécuter le procédé selon l'une quelconque des revendications 1 à 9.

11. Véhicule, en particulier un véhicule utilitaire, comprenant un frein à friction selon la revendication 10.
